# EUROPÄISCHE PATENTSCHRIFT

(11) **EP 1 738 943 B1**
(45) Veröffentlichungstag und Bekanntmachung des Hinweises auf die Patenterteilung: **28.07.2010**
(21) Anmeldenummer: 06013087.9
(22) Anmeldetag: 26.06.2006
(51) Int. Cl.: B60J 5/04

(54) **Türstruktur eines Kraftfahrzeuges**
Door structure of a motor vehicle
Structure de porte d'un véhicule automobile

(30) Priorität: 28.06.2005 DE 102005030507
(43) Veröffentlichungstag der Anmeldung: 03.01.2007
(73) Patentinhaber: Benteler Automobiltechnik GmbH, 33102 Paderborn (DE)
(72) Erfinder: Gehringhoff, Ludger, 33106 Paderborn (DE); Schäfers, Johannes, 33178 Borchen (DE)
(74) Vertreter: Griepenstroh, Jörg

(56) Entgegenhaltungen:
- EP-A- 0 818 339
- DE-A1- 2 023 067
- DE-A1- 10 001 753
- GB-A- 2 331 778

## Beschreibung

Die Erfindung betrifft die Türstruktur eines Kraftfahrzeugs mit den Merkmalen im Oberbegriff des Patentanspruchs 1.

Die Türstruktur eines Kraftfahrzeugs, insbesondere Personenkraftwagen, setzt sich in der Regel im Wesentlichen aus einem Türinnenblech, einem Türaußenblech, diversen Verstärkungen im Fensterbrüstungsbereich, aus Schloss- und Scharnierverstärkungen und einem Seitenaufprallschutz zusammen. Aus der DE 100 01 753 A1 ist es bekannt, mehrere dieser Bauteile zu einem Modulträger zusammenzufassen, der gleichzeitig diverse mechanische und elektrische Bedienungs- und Steuermodule, wie beispielsweise den Fensterhebermechanismus aufnehmen kann. Insgesamt ist ein solcher Modulträger mit integriertem Seitenaufprallträger ein komplexes Bauteil, das aufgrund der Vielzahl der zu erfüllenden Funktionen nicht jede Funktion optimal erfüllen kann. Insbesondere sind hinsichtlich der Ausbildung und des Verlauf des Seitenaufprallträgers naturgemäß Kompromisse einzugehen, um die Funktionsfähigkeit der elektrischen und mechanischen Bedienungs- und Steuermodule nicht zu behindern.

Aus der DE 2 023 067 A ist eine Tür für Kraftfahrzeuge bekannt, bei welcher auf der einem Türaußenblech abgewandten Seite eines Türinnenblechs eine Reihe von Verstärkungselemente vorgesehen sind. Diese können im Unterschied zu einem kompletten Modulträger zwar optimal auf die einzelnen zu erwartenden Belastungen abgestimmt werden, allerdings ist der Montageaufwand bei einer größeren Anzahl von Einzelteilen wesentlich höher.

Aus der GB 2 331 778 A ist ein einstückig ausgebildetes Verstärkungselement einer Kraftfahrzeugtüranordnung bekannt, das bis unterhalb der Fensterbrüstung der Türstruktur reicht und einen umlaufenden Rahmen aufweist. Eine obere Rahmenseite entläuft entlang der Fensterbrüstung. Eine vordere Rahmenseite verläuft in einem Scharnierbereich von oben nach unten, eine hintere Rahmenseite verläuft in einem Schlossbereich von oben nach unten und eine untere Rahmenseite verläuft entlang der Unterkante der Türstruktur, so dass die Rahmenseiten ein offenes Fenster bilden. In diesem Fenster ist ein einstückig mit dem Rahmen ausgebildeter, sich zur vorderen Rahmenseite und zur hinteren Rahmenseite erstreckender, gesickter Türaufprallträger angeordnet. Der Türaufprallträger ist an der Innenseite zur Türhaut angebracht.

Hiervon ausgehend liegt der Erfindung die Aufgabe zugrunde, eine Türstruktur mit den Merkmalen im Oberbegriff des Patentanspruchs 1 aufzuzeigen, bei welcher die Vorteile einer einfachen und raschen Montage mit einer anforderungsgerechten Konstruktion kombiniert werden, wobei die Türstruktur eine verbesserte Krafteinleitung von einem Türaufprallträger ermöglicht.

Diese Aufgabe ist bei einer Türstruktur mit den Merkmalen des Patentanspruchs 1 gelöst.

Vorteilhafte Weiterbildungen des Erfindungsgedankens sind Gegenstand der Unteransprüche.

Bei der erfindungsgemäßen Türstruktur ist vorgesehen, dass ein einstückig ausgebildetes Verstärkungselement unterhalb der Fensterbrüstung der Türstruktur angeordnet wird. Das Verstärkungselement besitzt einen umlaufenden Rahmen, wobei sich eine obere Rahmenseite entlang der Fensterbrüstung, eine vordere Rahmenseite in einem Scharnierbereich von oben nach unten, eine hintere Rahmenseite in einem Schlossbereich von oben nach unten und eine untere Rahmenseite entlang der unteren Türkante der Türstruktur erstreckt. Die Rahmenseiten bilden ein offenes Fenster, wobei in dem Fenster ein einstückig mit dem Rahmen ausgebildeter, sich von der vorderen Rahmenseite zur hinteren Rahmenseite erstreckender, gesickter Türaufprallträger angeordnet ist.

Bei diesem Verstärkungselement werden mehrere wichtige Strukturelemente in einem Bauteil vereint, d.h. es ist keine separate Schlossverstärkung.

Schanierverstärkung oder Fensterschachtverstärkung und insbesondere kein separater Türaufprallträger erforderlich. Dadurch wird die Teilevielfalt reduziert und die Montage vereinfacht. Daraus resultieren Kosteneinsparungen. Besonders wichtig ist, dass das erfindungsgemäß gestaltete Verstärkungselement ein besseres Crashverhalten des Kraftfahrzeugs bzw. der an einem Kraftfahrzeug vorgesehenen Türstruktur ermöglicht, da durch die einstückige Bauweise Anprallkräfte besser in die Fahrzeugstruktur einleitbar sind. Dies ist auf die Rahmenbauweise zurück zu führen.

Das Verstärkungselement ist nicht mit einem Modulträger zu verwechseln, der elektrische oder mechanische Komponenten aufnimmt, sondern kann zusätzlich zu einem solchen Modulträger montiert werden, wobei Teilfunktionen des Modulträgers, insbesondere hinsichtlich der Integration eines Türaufprallträgers, auf das rahmenförmige Verstärkungselement übertragen werden.

Es hat sich als vorteilhaft herausgestellt, wenn der Türaufprallträger diagonal zwischen der vorderen und hinteren Rahmenseite verläuft. Zusätzlich kann der Türaufprallträger durch wenigstens eine mit dem Türaufprallträger verbundene Versteifungsstrebe zusätzlich ausgesteift sein. Grundsätzlich können mehrere Versteifungsstreben vorgesehen sein. Als günstig wird es erachtet, wenn wenigstens eine Versteifungsstrebe von einem Eckbereich des Rahmens bis zum Türaufprallträger verläuft. Bei einem diagonal verlaufonden Türaufprallträger, der mit zwei von den Eckbereichen ausgehenden Versteifungsstreben verbunden ist, ergibt sich eine kreuzartige Aussteifung des Fensters, das durch den Türaufprallträger und die Versteifungsstreben in unterschiedliche Bereiche unterteilt ist. Eine solche, sich kreuzende Aussteifung besitzt wesentlich bessere Crash-Eigenschaften, da sich die gesamte Türstruktur biegesteifer verhält und damit ein hohes Energieaufnahmevermögen besitzt. Bei einer sich kreuzenden Aussteifung wird es als zweckmäßig angesehen, wenn eine erste Versteifungsstrebe in einer vorderen Hälfte des Türaufprallträgers mit diesem verbunden und eine zweite Versteifungsstrebe in einer hinteren Hälfte des Türaufprallträgers mit diesem verbunden ist.

Das Verstärkungselement ist grundsätzlich profiliert ausgeführt, um eine möglichst hohe Biegesteifigkeit zu erreichen. Insbesondere ist der umlaufende Rahmen profiliert ausgeführt. Hinsichtlich der Geometrie ist es möglich, Bleche, insbesondere Stahlbleche, zu verwenden, die Bereiche reduzierter Blechdicke aufweisen. Diese Bereiche können in horizontalem Abstand oder auch in vertikalem Abstand zueinander angeordnet sein. Die Positionierung und Größe der Bereiche ist abhängig von dem zu erwartenden Belastungsfall.

Als Ausgangsmaterial für das Verstärkungselement kommen insbesondere hochfeste kaltformbare Stähle mit einer Zugfestigkeit von 900 bis 1.100 N/mm², insbesondere von ca. 1.000 N/mm² zum Einsatz.

Besonders vorteilhaft ist die Verwendung warmgeformter Stähle mit Festigkeiten in einem Bereich von 1.400 N/mm² bis 1.600 N/mm², insbesondere von ca. 1.500 N/mm².

Die Warmumformung von Stahlblech ermöglicht die Herstellung komplexer Türstrukturen mit hoher Genauigkeit. Die Integration des Türaufprallträgers in die Türstruktur ist insbesondere unter Verwendung warmgeformter Stähle möglich, da sich extrem verbesserte Festigkeiten und damit ein hervorragendes Crashverhalten bei gleichzeitig geringerem Gewicht erzielen lassen.

Auf Grund herstellungstechnischer Schwierigkeiten haben sich die im Stand der Technik vorgeschlagenen integrierten Türstrukturen bislang nicht durchgesetzt, da sich nur mit Werkstoffen dieser hohen Festigkeitsklassen optimale Ergebnisse hinsichtlich des Produkts und hinsichtlich des Herstellungsverfahrens erzielen lassen, Insbesondere wenn größere Strukturbauteile wie z.B. die Türstruktur eines Kraftfahrzeuges hergestellt werden sollen, in welche gleichzeitig der Seitenaufprallschutz integriert ist, werden extreme Anforderungen sowohl an den eingesetzten Werkstoff als auch an das herstellungsverfahren gestellt, um ein crashoptimales Bauteil schaffen zu können. Mit dem erfindungsgemäßen Verfahren, insbesondere unter Verwendung eines warmgeformten Stahls mit Festigkeiten in dem Bereich von 1400 N/mm² bis 1600

N/mm², lassen sich diese Forderungen erfüllen.

Die Erfindung wird nachfolgend anhand der in den Zeichnungen dargestellten Ausführungsbeispiele näher erläutert. Es zeigen.
- Figur 1: zum Stand der Technik eine Explosionsdarstellung einer Tür eines Personenkraftwagens;
- Figur 2: eine Draufsicht auf eine erste Ausführungsform eines rahmenförmigen Verstärkungselements für eine Kraftfahrzeugtür;
- Figur 3: ein Schnitt entlang der Linie III-III der Figur 2;
- Figur 4: ein Schnitt entlang der Linie IV-IV der Figur 2;
- Figur 5: eine Abwandlung des Verstärkungselements der Figur 2;
- Figur 6: eine Abwandlung des Verstärkungselements der Figur 2;
- Figur 7: eine Weiterbildung des Verstärkungselements der Figur 2 und
- Figur 8: eine Weiterbildung des Verstärkungselements der Figur 2.

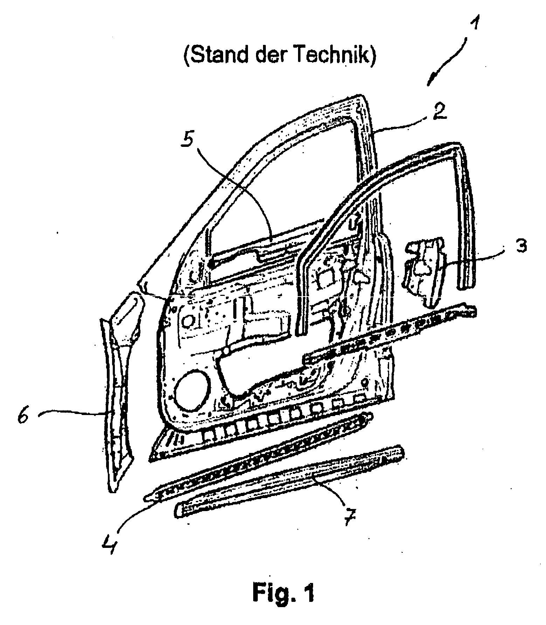

Figur 1 zeigt eine aus dem Stand der Technik bekannte Türstruktur 1 in einer Explosionsdarstellung, aus der deutlich wird, dass die Türstruktur 1 aus einer Vielzahl von Einzelteilen zusammengesetzt wird. Aufgrund der Belastungen einer Tür muss ein Türinnenblech 2 in bestimmten Bereichen zusätzlich ausgesteift werden. Dafür ist eine Schlossverstärkung 3, eine erste Schachtverstärkung 4, eine zweite Schachtverstärkung 5, eine Scharnierverstärkung 6 sowie ein Türaufprallträger 7 vorgesehen. Die genannten Bauteile müssen einzeln zu der Türstruktur zusammengesetzt werden, womit ein erheblicher Montageaufwand verbunden ist. Für die Montage müssen entsprechende Verbindungsflächen an den einzelnen Bauteilen vorgesehen sein, was sich nachteilig auf das Gesamtgewicht des Kraftfahrzeugs auswirkt.

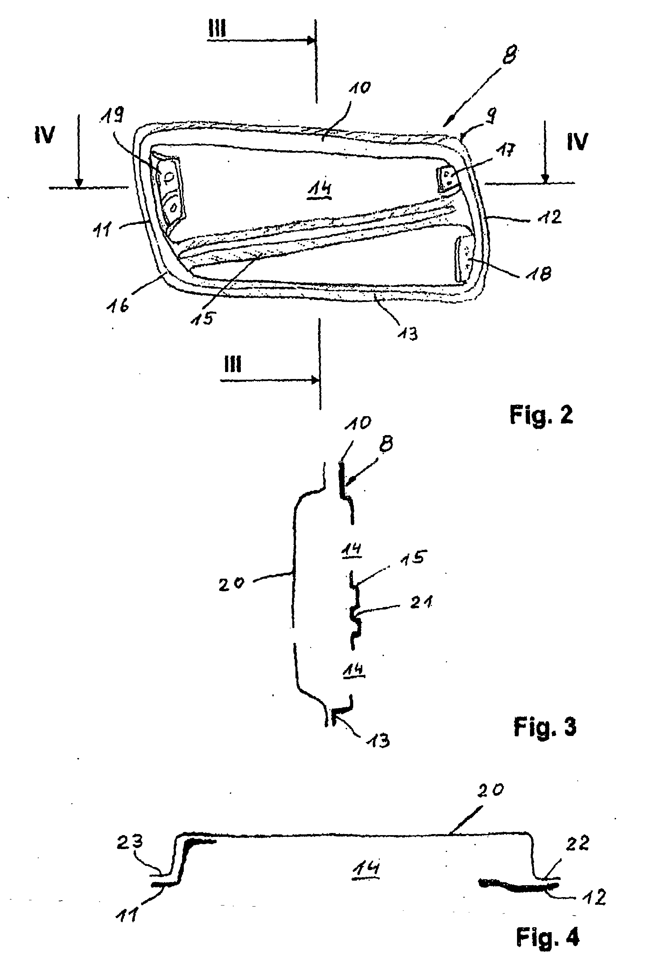

Figur 2 zeigt ein Verstärkungselement 8. Das Verstärkungselement 8 bildet mit dem Türinnenblech 2 und dem Türaußenblech (nicht dargestellt) die eigentliche Türstruktur. Die einzelnen Elemente werden im Wesentlichen durch Fügeverbindungen, wie Punktschweißen, miteinander gefügt. Das Verstärkungselement 8 ist einstückig ausgebildet und aus einer Blechplatine hergestellt. Die Herstellung kann durch Warmumformung erfolgen. Auch eine Kaltumformung ist möglich. Als Werkstoff kann ein hochfester Stahl mit einer Zugfestigkeit von ca. 1.000 N/mm² zum Einsatz kommen. Eine Oberflächenbeschichtung, insbesondere durch Verzinken ist zum Korrosionsschutz möglich.

Das dargestellte Verstärkungselement 8 ist rahmenförmig konfiguriert. Es weist daher einen umlaufenden, geschlossenen Rahmen 9 auf, dessen obere Rahmenseite 10 entlang der Fensterbrüstung, dessen vordere Rahmenseite 11 in einem Scharnierbereich von oben nach unten, dessen hintere Rahmenseite 12 in einem Schlossbereich von oben nach unten und dessen untere Rahmenseite 13 entlang der Unterkante der Türstruktur erstreckt Da die Unterkante der Türstruktur im Wesentlichen parallel zur Fensterbrüstung verläuft, laufen auch die oberen und unteren Rahmenseiten 10, 13 im Wesentlichen parallel zueinander. Die vorderen und hinteren Rahmenseiten 11, 12 verlaufen in einem leichten Winkel zur oberen und unteren Rahmenseite 10, 13. Dies ist auf die jeweilige Geometrie der Türstruktur zurück zu führen. In diesem Beispiel ergibt sich eine im Wesentlichen parallelogrammförmige Konfiguration für den Rahmen 9. Wichtig ist, dass der Rahmen 9 ein offenes Fenster 14 bildet, in welchem ein einstückig mit dem Rahmen 9 ausgebildeter Türaufprallträger 15 ausgebildet ist. Der Türaufprallträger 15 erstreckt sich von der vorderen Rahmenseite 11 zur hinteren Rahmenseite 12 und ist gegenüber der unteren Rahmenseite 13 geneigt angeordnet, so dass er sich diagonal zwischen der vorderen und hinteren Rahmenseite 11, 12 erstreckt. In diesem Ausführungsbeispiel reicht der Türaufprallträger von einem Eckbereich 16 zwischen der vorderen Rahmenseite 11 und der unteren Rahmenseite 13 in die obere Hälfte der hinteren Rahmenseite 12. Dadurch ist es möglich, sowohl oberhalb als auch unterhalb des Türaufprallträgers 15 an der hinteren Rahmenseite 12 Befestigungslaschen 17, 18 vorzusehen, um das Verstärkungselement 8 an dem Türinnenblech 20 zu befestigen (Figur 3). Eine weitere Befestigungslasche 19 ist innerhalb des Fensters 14 an der Rahmenseite 11 vorhanden ebenso wie die Befestigungslaschen 17, 18 innerhalb des Fensters 14 an der hinteren. Rahmenseite 11 vorgesehen sind.

Aus Figur 3 ist das Verstärkungselement 8 im Vertikalschnitt entlang der Linie III-III erkennbar, wie es an einem Türinnenblech 20 randseitig befestigt ist. Es ist zu erkennen, dass nicht nur das Verstärkurtgsefement 8, sondern auch der Türaufprallträger 15 profiliert ausgeführt ist. Durch die Profilierung besitzt das Verstärkungselement 8 eine erhöhte Biegesteifigkeit. Der Türaufprallträger 15 weist eine mittige nutförmige Einprägung 21 auf, die sich über die gesamte Länge des Türaufprallträgers 15 erstreckt. Die oberen und unteren Rahmenseiten 10, 13 des Verstärkungselements 8 sind im wesentlichen an den Verlauf des Türinnenblechs 20 angepasst, wobei in diesem Ausführungsbeispiel die untere Rahmenseite 13 stärker abgewinkelt ausgeführt ist als die obere Rahmenseite 10.

Aus der Schnittdarstellung der Figur 4 ist zu erkennen, dass die hintere Rahmenseite 12 des Verstärkungselements 8 im wesentlichen parallel zum Innenblech 20 verläuft, wohingegen die vordere Rahmenseite 11 des Verstärkungselements im Querschnitt S-förmig konfiguriert ist und in ihrem Verlauf an die Kontur des Innenblechs 20 angepasst ist. Das Innenblech 20 ist in dieser Querschnittsdarstellung gewissermaßen napfartig konfiguriert mit sich randseitig anschließenden Flanschen 22, 23, die in diesem Ausführungsbeispiel parallel zu der vorderen Rahmenseite 11 und der hinteren Rahmenseite 12 verlaufen.

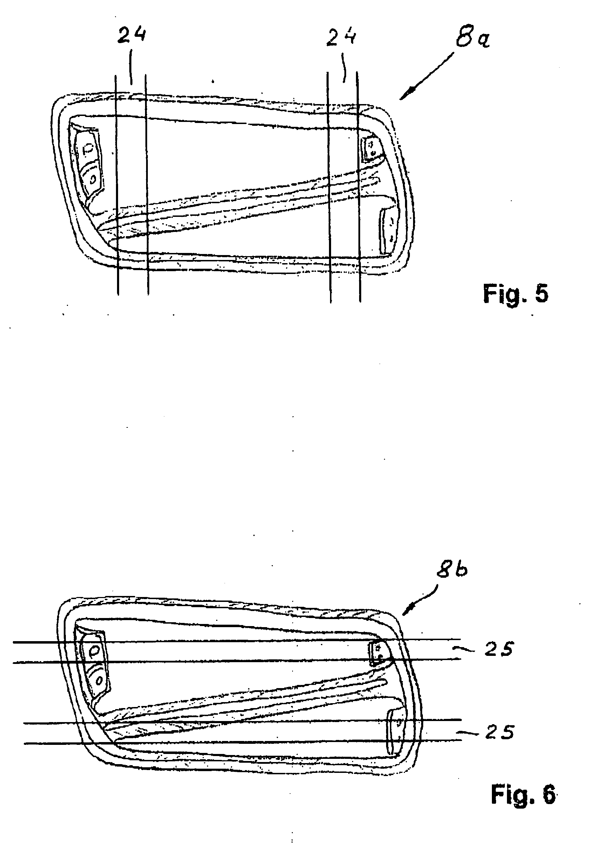

Die Figuren 5 und 6 zeigen zwei Ausführungsformen von Verstärkungselementen 8a, die sich von der Ausführungsform der Figur 2 lediglich dadurch unterscheiden, dass Bereiche unterschiedlicher Blechdicken vorgesehen sind. In dem Ausführungsbeispiel der Figur 5 sind beispielhaft horizontal beabstandete Bereiche 24 reduzierter Blechdicke eingezeichnei, die in horizontalem Abstand zueinander angeordnet sind, wohingegen die Bereiche reduzierter Blechdicke 25 in der Ausführungsform der Figur 6 in vertikalem Abstand zueinander angeordnet sind. Die reduzierte Blechdicke wird durch partielles Walzen der Blechplatine erreicht, so dass eine anforderungsgerechte Materialverteilung eingestellt werden kann.

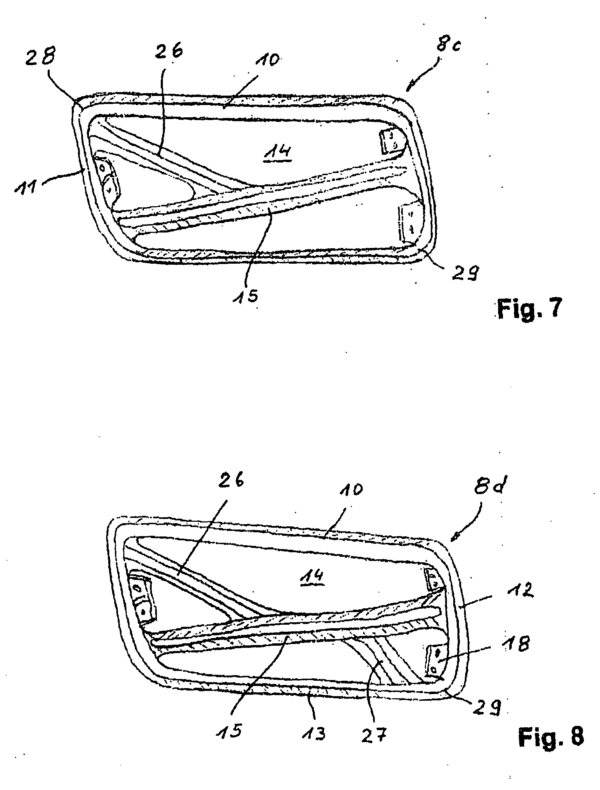

Die Ausführungsformen der Figuren 7 und 8 unterscheiden sich von derjenigen der Figur 2 dadurch, dass zusätzliche Versteifungsstreben 26, 27 vorgesehen sind. Die Versteifungsstrebe 26 in Figur 7 ist ebenso wie der Türaufprallträger 15 in Längsrichtung gesickt ausgeführt. Sie erstreckt sich von einem oberen Eckbereich 28 zwischen der oberen Rahmenseite 10 und der vorderen Rahmenseite 11 diagonal in Richtung auf den gegenüber liegenden Eckbereich 29 zwischen der hinteren Rahmenseite 12 und der unteren Rahmenseite 13. Die Versteifungsstrebe 26 reicht allerdings nur bis zum Türaufprallträger 26. Durch die zusätzliche Versteifungsstrebe 26 ist das Fenster 14 nunmehr in drei dreieckförmige Teilbereiche gegliedert. Der oberhalb des Türaufprallträgers 15 liegende Teilbereich ist durch Versteifungsstrebe 26 geteilt. Insgesamt ermöglicht die zusätzliche Versteifungsstrebe 26 eine bessere Krafteinleitung von dem türaufprallträger in das Verstärkungselement 8c bzw. dessen Rahmen und damit in die Türstruktur des Kraftfahrzeugs.

Die Weiterbildung der Figur 8 zeigt eine weitere Versteifungsstrebe 27, die sich von dem Eckbereich 29 zwischen der hinteren Rahmenseite 12 und der unteren Rahmenseite 13 bis zum Türaufprallträger 15 erstreckt. Auch diese Versteifungsstrebe 27 ist in Längsrichtung gesickt ausgeführt. Aufgrund der im Eckbereich vorgesehenen Befestigungslasche 18 ist die Versteifungsstrebe 27 etwas aus dem Eckbereich 29 herausgerückt und in Richtung der unteren Rahmenseite 13 verlagert, so dass die Längsachse der Versteifungsstrebe 27 die obere Rahmenseite 10 etwa in der Mitte schneidet. Ingesamt weist das Fenster somit vier von Versteifungsstreben 26, 27 bzw, dem Türaufprallträger 15 unterbrochene Teilbereiche auf. Gegenüber der Ausführungsform der Figur 7 verhält sich das Verstärkungselement 8d der Figur 8 noch biegesteifer. Die Krafteinleitung in die Struktur der Tür bzw. des Kraftfahrzeugs ist so weiter verbessert.

### Bezugszeichen

- 1: -Türstruktur
- 2: -Türinnenblech
- 3: -Schlossverstärkung
- 4: -erste Schachtverstärkung
- 5: -zweite Schachtverstärkung
- 6: -Scharnierverstärkung
- 7: -Türaufprallträger
- 8: -Verstärkungselement
- 8a: -Verstärkungselement
- 8b: -Verstärkungselement
- 8c: -Verstärkungselement
- 8d: -Verstärkungselement
- 9: -Rahmen
- 10: -obere Rahmenseite
- 11: -vordere Rahmenseite
- 12: -hintere Rahmenseite
- 13: -untere Rahmenseite
- 14: -Fenster
- 15: -Türaufprallträger
- 16: -Eckbereich
- 17: -Befestigungslasche
- 18: -Befestigungslasche
- 19: -Befestigungslasche
- 20: -Türinnenblech
- 21: -Einprägung
- 22: -Flansch
- 23: -Flansch
- 24 -: Bereich reduzierter Blechdicke
- 25: -Bereich reduzierter Blechdicke
- 26: -Verstärkungsstrebe
- 27: -Verstärkungsstrebe
- 28: -Eckbereich
- 29: -Eckbereich

## Patentansprüche

1. Türstruktur eines Kraftfahrzeugs mit Türaußenblech, einem Türinnenblech und einem einstückig ausgebildeten Verstärkungselement (8, 8a-d), das unterhalb der Fensterbrüstung der Türstruktur angeordnet ist und einen umlaufenden Rahmen (9) aufweist, wobei sich eine obere Rahmenseite (10) entlang der Fensterbrüstung, eine vordere Rahmenseite (11) in einem Scharnierbereich von oben nach unten, eine hintere Rahmenseite (12) in einem Schlossbereich von oben nach unten und eine untere Rahmenseite (13) entlang der Unterkante der Türstruktur erstreckt, so dass die Rahmenseiten (10-13) ein offenes Fenster (14) bilden, wobei in dem Fenster (14) ein einstückig mit dem Rahmen (9) ausgebildeter, sich von der vorderen Rahmenseite (11) zur hinteren Rahmenseite (12) erstreckender, gesickter Türaufprallträger (15) angeordnet ist, **dadurch gekennzeichnet, dass** das Verstärkungselement (8, 8a-d) an der Türstruktur auf der dem Türaußenblech abgewandten Seite des Türinnenblechs (20) unlösbar befestigt ist.

2. Türstruktur eines Kraftfahrzeugs nach Anspruch 1, **dadurch gekennzeichnet, dass** der Türaufprallträger (15) diagonal zwischen der vorderen und der hinteren Rahmenseite (11, 12) verläuft.

3. Türstruktur nach Anspruch 1 oder 2, **dadurch gekennzeichnet, dass** in dem Fenster (14) wenigstens eine mit dem der Türaufprallträger (15) verbundene Versteifungsstrebe (26, 27) angeordnet ist.

4. Türstruktur nach Anspruch 3, **dadurch gekennzeichnet, dass** sich die wenigstens eine Versteifungsstrebe (26, 27) von einem Eckbereich (28, 29) des Rahmens (9) bis zum Türaufprallträger (15) erstreckt.

5. Türstruktur nach Anspruch 4, **dadurch gekennzeichnet, dass** eine erste Versteifungsstrebe (26) in einer vorderen Hälfte des Türaufprallträgers (15) mit diesem verbunden ist und eine zweite Versteifungsstrebe (27) in einer hinteren Hälfte des Türaufprallträgers (15) mit diesem verbunden ist.

6. Türstruktur nach einem der Ansprüche 1 bis 5, **dadurch gekennzeichnet, dass** das Verstärkungselement (8a, 8b) durch Walzen Bereiche reduzierter Blechdicke (24, 25) aufweist.

7. Türstruktur nach einem der Ansprüche 1 bis 6, **dadurch gekennzeichnet, dass** mehrere Bereiche reduzierter Blechdicke (24) in horizontalem Abstand zueinander angeordnet sind.

8. Türstruktur nach einem der Ansprüche 1 bis 6, **dadurch gekennzeichnet, dass** mehrere Bereiche reduzierter Blechdicke (25) in vertikalem Abstand zueinander angeordnet sind.

9. Türstruktur nach einem der Ansprüche 1 bis 8, **dadurch gekennzeichnet, dass** das Verstärkungselement (24. 25) aus einem hochfesten kaltformbaren Stahl mit einer Zugfestigkeit von 900 N/mm² bis 1.100 N/mm² insbesondere von 1.000 N/mm² gefertigt ist.

10. Türstruktur nach einem der Ansprüche 1 bis 8, **dadurch gekennzeichnet, dass** das Verstärkungselement (24,25) aus einem hochfesten warmformbaren Stahl mit einer Zugfestigkeit in einem Bereich von 1.400 N/mm² bis 1.600 N/mm², insbesondere von 1.500 N/mm², gefertigt ist.

## Claims

1. Door structure of a motor vehicle comprising a door outer panel and a door inner panel and a reinforcing element (8, 8a-d) configured in one piece, said reinforcing element being arranged beneath the window ledge of the door structure and comprising a peripheral frame (9), wherein an upper frame side (10) extends along the window ledge, a front frame side (11) extends in a hinge region from above to below, a rear frame side (12) extends in a lock region from above to below and a lower frame side (13) extends along the lower edge of the door structure so that the frame sides (10-13) comprise an open window (14), wherein a flanged door impact support (15) configured in one piece with the frame (9) is arranged in the window (14) extending from the front frame side (11) to the rear frame side (12), **characterised in that** the reinforcing element (8, 8a-d) is non-detachably fastened to the door structure on the side of the door inner panel (20) facing away from the door outer panel.

2. Door structure of a motor vehicle according to claim 1, **characterised in that** the door impact support (15) extends diagonally between the front and rear frame sides (11, 12).

3. Door structure according to claim 1 or 2, **characterised in that** at least one stiffening strut (26, 27) connected to the door impact support (15) is arranged in the window (14).

4. Door structure according to claim 3, **characterised in that** the at least one stiffening strut (26, 27) extends from a corner region (28, 29) of the frame (9) to the door impact support (15).

5. Door structure according to claim 4, **characterised in that** a first stiffening strut (26) in a front half of the door impact support (15) is connected thereto and a second stiffening strut (27) in a rear half of the door impact support (15) is connected thereto.

6. Door structure according to one of the claims 1 to 5, **characterised in that** the reinforcing element (8a, 8b) has regions of sheet thickness (24, 25) which are reduced by rolling.

7. Door structure according to one of the claims 1 to 6, **characterised in that** a plurality of regions of reduced sheet thickness (24) are arranged horizontally spaced apart from one another.

8. Door structure according to one of the claims 1 to 6, **characterised in that** a plurality of regions of reduced sheet thickness (25) are arranged vertically spaced apart from one another.

9. Door structure according to one of the claims 1 to 8, **characterised in that** the reinforcing element (24, 25) is made from a high strength cold-formable steel having a tensile strength in the range of 900 N/mm² to 1,100 N/mm², particularly 1,000 N/mm².

10. Door structure according to one of the claims 1 to 8, **characterised in that** the reinforcing element (24, 25) is made from a high strength hot-formable steel having a tensile strength in the range of 1,400 N/mm² to 1,600 N/mm², particularly 1,500 N/mm².

## Revendications

1. Structure de porte d'un véhicule automobile avec un panneau extérieur de porte, un panneau intérieur de porte et un élément de renforcement (8, 8a-d) réalisé d'un seul tenant qui est disposé au-dessous de l'appui de fenêtre de la structure de porte et présente un cadre périphérique (9), un côté du cadre (10) supérieur s'étendant le long de l'appui de fenêtre, un côté du cadre (11) avant s'étendant dans une zone de charnière de haut en bas, un côté du cadre (12) arrière s'étendant dans une zone de serrure de haut en bas et un côté du cadre (13) inférieur s'étendant le long de l'arête inférieure de la structure de porte, de sorte que les côtés du cadre (10-13) forment une fenêtre ouverte (14) dans laquelle est ménagé un support d'impacts de porte (15) mouluré, s'étendant du côté du cadre (11) avant jusqu'au côté du cadre (12) arrière, réalisé d'un seul tenant avec le cadre (9), **caractérisée en ce que** l'élément de renforcement (8, 8a-d) est fixé de manière inamovible sur la structure de porte sur le côté du panneau intérieur de porte (20) éloigné du panneau extérieur de porte.

2. Structure de porte d'un véhicule automobile selon la revendication 1, **caractérisée en ce que** le support d'impacts de porte (15) s'étend en diagonale entre le côté du cadre avant et le côté du cadre arrière (11, 12).

3. Structure de porte selon la revendication 1 ou 2, **caractérisée en ce qu'**au moins une entretoise de renforcement (26, 27) reliée au support d'impacts de porte (15) est disposée dans la fenêtre (14).

4. Structure de porte selon la revendication 3, **caractérisée en ce que** l'au moins une entretoise de renforcement (26, 27) s'étend d'une zone angulaire (28, 29) du cadre (9) jusqu'au support d'impacts de porte (15).

5. Structure de porte selon la revendication 4, **caractérisée en ce qu'**une première entretoise de renforcement (26) est reliée dans une moitié avant du support d'impacts de porte (15) à celui-ci et une seconde entretoise de renforcement (27) est reliée dans une moitié arrière du support d'impacts de porte (15) à celui-ci.

6. Structure de porte selon l'une quelconque des revendications 1 à 5, **caractérisée en ce que** l'élément de renforcement (8a, 8b) présente des zones d'épaisseur de panneau réduite (24, 25) par laminage.

7. Structure de porte selon l'une quelconque des revendications 1 à 6, **caractérisée en ce que** plusieurs zones d'épaisseur de panneau réduite (24) sont disposées à une distance horizontale les unes par rapport aux autres.

8. Structure de porte selon l'une quelconque des revendications 1 à 6, **caractérisée en ce que** plusieurs zones d'épaisseur de panneau réduite (25) sont disposées à une distance verticale les unes par rapport aux autres.

9. Structure de porte selon l'une quelconque des revendications 1 à 8, **caractérisée en ce que** l'élément de renforcement (24, 25) est fabriqué en un acier à haute résistance, déformable à froid avec une résistance à la traction comprise entre 900 N/mm² et 1 100 N/mm², en particulier de 1 000 N/mm².

10. Structure de porte selon l'une quelconque des revendications 1 à 8, **caractérisée en ce que** l'élément de renforcement (24, 25) est fabriqué en un acierà haute résistance, déformable à chaud avec une résistance à la traction dans la plage de 1 400 N/mm² à 1 600 N/mm², en particulier de 1 500 N/mm².
